# EUROPÄISCHE PATENTSCHRIFT

(11) **EP 2 368 664 B1**
(45) Veröffentlichungstag und Bekanntmachung des Hinweises auf die Patenterteilung: **18.06.2014**
(21) Anmeldenummer: 11159176.4
(22) Anmeldetag: 22.03.2011
(51) Int. Cl.: B23Q 1/54, B23Q 35/04, B23Q 35/10, B23C 3/12, B27D 5/00

(54) **Bearbeitungsaggregat**
Processing machine
Agrégat de traitement

(30) Priorität: 25.03.2010 DE 102010003274
(43) Veröffentlichungstag der Anmeldung: 28.09.2011
(73) Patentinhaber: Homag Holzbearbeitungssysteme AG, 72296 Schopfloch (DE)
(72) Erfinder: Schlotter, Rainer, 72160 Horb (DE); Gringel, Martin, 72479 Straßberg (DE)
(74) Vertreter: HOFFMANN EITLE

(56) Entgegenhaltungen:
- EP-A1- 0 610 732
- EP-A1- 1 640 112
- WO-A1-2008/135454
- DE-C1- 10 229 775
- FR-A1- 2 702 688

## Beschreibung

### Technisches Gebiet

Die vorliegende Erfindung bezieht sich auf ein Bearbeitungsaggregat, insbesondere 5-Achsbearbeitungsaggregat zum Bearbeiten von bevorzugt dreidimensional geformten Werkstücken, die bevorzugt zumindest abschnittsweise aus Holz, aus Kunststoff oder dergleichen bestehen.

### Stand der Technik

Insbesondere in der Möbelindustrie werden geschwungene Werkstücke mit einer dreidimensionalen Form verarbeitet. Als Formholzteile werden diese dann zum Beispiel für Möbelfronten, Möbelteile sowie Formholzteile für alle möglichen Einsatzzwecke verwendet. Solche räumlich geformten Werkstücke weisen konkave oder auch konvexe Werkstückoberflächen auf, die verbreitet mittels 5-Achs-Bearbeitungsmaschinen bearbeitet werden. Um ansprechende Oberflächen zu erzielen, erfolgt verbreitet zuerst eine Fräsbearbeitung und anschließend eine Beschichtung mittels einer Folie.

Weisen diese Werkstücke allerdings Fertigungstoleranzen bzw. Maßabweichungen auf, die bei der Fräsbearbeitung nicht berücksichtigt werden, wird bei der Fräsbearbeitung nicht die gewünschte Qualität erreicht. Weist zum Beispiel ein konkaves Werkstück, an dem an der Außenkante ein Radius mittels einer Fräsbearbeitung hergestellt werden soll, Toleranzen bzw. Maßabweichungen auf, die in der 5-Achs-Fräsmaschine nicht berücksichtigt sind, wird mit einem entsprechenden Radius-Formfräser der Radius am Werkstück je nach Maßabweichung zu tief oder mit einer zu geringen Tiefe gefräst. Die Folge ist eine unzureichende Produktqualität in unzureichend abgestimmten Radiusübergängen oder Stufen in der Produktoberfläche.

Tastaggregate mit Tastkurven haben den Nachteil, dass das Tastaggregat achsenorientiert eingesetzt werden muss, das heißt, dass die tastende Kurve immer parallel zur Werkstückkante verlaufen muss. Ein solches Tastaggregat kann nur an einem kartesischen 5-Achs-Kopf verwendet werden, da bei einem kardanischen 5-Achs-Kopf die parallele Ausrichtung der Tastkurve zur Werkstückkante nicht immer realisierbar ist.

Die EP 0 610 732 A1 offenbart auf Fig. 4 ein Werkzeugkopf mit einem Tastelement, das eine flache Anlagefläche aufweist.

Als weiteres Dokument offenbart die EP 1 640 112 A1 eine Anschlussvorrichtung für einen Mehrachsen-Bearbeitungskopf. Ein solcher Bearbeitungskopf hat ein um eine erste Achse drehbares Spindelgehäuse mit einer Motorspindel, die eine an der freien Stirnseite des Spindelgehäuses liegende Aufnahme für Bearbeitungswerkzeuge oder -aggregate ausweist.

### Darstellung der Erfindung

Es ist daher Aufgabe der vorliegenden Erfindung, ein Bearbeitungsaggregat der oben genannten Art bereitzustellen, das es ermöglicht, eine Fräsbearbeitung an dreidimensionalen Werkstückflächen durchzuführen, die Toleranzen bzw. Maßabweichungen aufweisen. Dabei sollen sowohl konkave als auch konvexe Werkstückoberflächen bearbeitet werden können. Das Bearbeitungsaggregat soll sowohl an 5-Achs-Kopf-Bearbeitungsaggregaten als auch an kardanischen 5-Achs-Kopf-Bearbeitungsaggregaten einsetzbar sein. Damit soll es ermöglicht werden, eine gute Oberflächenqualität und Maßhaltigkeit kostengünstig herzustellen.

Erfindungsgemäß wird diese Aufgabe durch ein Bearbeitungsaggregat mit den Merkmalen des Patentanspruchs 1 gelöst. In den Unteransprüchen finden sich vorteilhafte Ausgestaltungen und Verbesserungen der Erfindung.

Ein erfindungsgemäßes Bearbeitungsaggregat, insbesondere 5-Achs-Bearbeitungsaggregat zum Bearbeiten von bevorzugt dreidimensional geformten Werkstücken, die bevorzugt zumindest abschnittsweise aus Holz, aus Kunststoff oder dergleichen bestehen, weist einen Werkzeugkopf zur Anordnung wenigstens einer Schneide auf. Der Werkzeugkopf ist dabei bevorzugt drehangetrieben und besonders bevorzugt ein Fräskopf. Erfindungsgemäß ist ferner an dem Bearbeitungsaggregat eine Tastanordnung, die ein Tastelement mit einer Anlagefläche zum Abstützen des Bearbeitungsaggregates bei Verwendung an einem Werkstück aufweist, vorgesehen.

Das Tastelement wird bei der Bearbeitung eines Werkstücks mit seiner Anlagefläche bevorzugt gleitend über das Werkstück geführt und stützt sich dabei gleitend am Werkstück ab. Dadurch wird der Werkzeugkopf in einem definierten Abstand zum Werkstück gehalten. Dies bietet den Vorteil, dass bei Abweichungen des Werkstücks von einer Sollgeometrie, beispielsweise eine Oberflächenbearbeitung trotzdem möglich ist, da der Werkzeugkopf relativ zum Werkstück verfahren wird. Bei der Generierung der NC-Programme können dadurch Toleranzen in der Werkstückgeometrie bis zu einem gewissen Umfang unberücksichtigt bleiben. Diese Toleranzen werden durch das Bearbeitungsaggregat mittels der Tastanordnung ausgeglichen.

Erfindungsgemäß weist die Anlagefläche des Tastelements zum Abstützen des Bearbeitungsaggregates am Werkstück zumindest abschnittsweise die Form einer Kalotte auf. Aufgrund der so gewölbten Anlagefläche ist es möglich, das Bearbeitungsaggregat mittels der Tastanordnung entlang von ebenen, konvexen als auch konkaven Werkstückflächen zu führen. Der Krümmungsradius der Kalotte ist dabei bevorzugt kleiner als der kleinste Radius einer konkav geformten Werkstückoberfläche, um das vollständige Abtasten der Werkstückoberfläche zu ermöglichen. Die gewölbte kalottenförmige Anlagefläche des Tastelementes ermöglicht es, dass das Tastelement gut über die abzutastende Werkstückoberfläche gleitet.

Die Ausbildung der Anlagefläche als rotationssymmetrische Kalotte ermöglicht dabei eine gleichbleibende Tastgeometrie unabhängig von einer Verdrehung der Tastanordnung um die Symmetrieachse der Anlagefläche. Dadurch kann bei Verwendung des erfindungsgemäßen Bearbeitungsaggregates an einem kardanischen 5-Achs-Kopf (Schräg-Achs-Kopf) eine gleichbleibende Tastgeometrie erzielt werden.

Im Gegensatz zu Tastaggregaten, die ein oder mehrere Tastkurven zum Abtasten der Werkstückoberflächengeometrie verwenden, entfällt bei dem erfindungsgemäßen Bearbeitungsaggregat die Notwendigkeit eine Tastkurve immer parallel zur Werkstückkante auszurichten. Das erfindungsgemäße Bearbeitungsaggregat ermöglicht es, auch konkav oder konvex geformte vorgefertigte Werkstückoberflächen, die Toleranzen bzw. Maßabweichungen aufweisen, hochpräzise zu bearbeiten. Besonders bevorzugt ist die Bearbeitung eine Fräsbearbeitung. Der Werkzeugkopf kann erfindungsgemäß jedoch genauso für andere Bearbeitungsverfahren, zum Beispiel eine Schleifbearbeitung oder eine Sägebearbeitung vorgesehen sein.

Gemäß einer bevorzugten Ausführungsform der vorliegenden Erfindung weist die Anlagefläche wenigstens teilweise die Form eines von: Kugelsegment, Hyperboloidsegment, Ellipsoidsegment, Paraboloidsegment oder einer Kombination davon auf. Als vorteilhaft hat sich erwiesen, wenn der Krümmungsradius der Anlagefläche, dort wo die Anlagefläche das Werkstück berührt, möglichst groß ist. Dadurch ergibt sich ein optimales Gleiten des Tastelementes über die Werkstückoberfläche. Gleichzeitig ist die Geometrie der Anlagefläche so, dass sie auch konkave Werkstückoberflächen bei einer Einpunktberührung abtasten kann. Um einen möglichst großen Radius der Anlagefläche im Berührungspunkt mit dem Werkstück zu realisieren und gleichzeitig eine Kollision der Anlagefläche mit dem Werkstück an Punkten, die nicht den Kontaktpunkt bilden sollen, zu vermeiden, können die genannten Formen auch miteinander kombiniert werden. Dabei kann zum Beispiel ein Kugelsegment, das den Berührungspunkt der Anlagefläche bilden soll an ein Paraboloidsegment angesetzt sein, das die Anlagefläche fortsetzt.

Gemäß einer bevorzugten Ausführungsform der vorliegenden Erfindung weist das Tastelement einen Tastring auf, an dem ein wesentlicher Teil der Anlagefläche ausgebildet ist. Die Form des Tastrings entspricht dabei zum Beispiel einer Kugelkalotte. Der Radius der Kugelkalotte ist dann kleiner als der kleinste Radius einer zu bearbeitenden konkaven Werkstückform. Bevorzugt kann der Tastring mit einer schmalen Tastringfläche ausgeführt werden. Bevorzugt weist die Anlagefläche am Tastring wenigstens teilweise eine radiale Erstreckung von weniger als 10 mm oder bevorzugt weniger als 10 mm, beispielsweise 1 mm auf. Die Ausbildung der Anlagefläche am Tastring ermöglicht es, dass Späne, die sich auf der Werkstückoberfläche befinden, in innerhalb des Tastrings angeordneten Freiräumen aufgenommen werden können. Dadurch kann die Tastgenauigkeit weiter erhöht werden, da Ungenauigkeiten beim Tasten durch das Aufsetzen der Anlagefläche auf den Spänen vermieden wird.

Gemäß einer bevorzugten Weiterbildung der vorliegenden Erfindung ist der Tastring mit sich radial erstreckenden Rippen verbunden. Zwischen den Rippen sind Freiräume zum Durchlassen von Spänen angeordnet.

Gemäß einer bevorzugten Ausführungsform der vorliegenden Erfindung ist die Tastanordnung nachgiebig am Bearbeitungsaggregat gelagert. Durch die federnde Lagerung der Tastanordnung lassen sich übermäßige Andruckkräfte am Werkstück begrenzen. Dadurch können Tastmarken, die durch das Andrücken des Tastelementes an das Werkstück entstehen, vermieden werden. Bevorzugt ist an der Tastanordnung, besonders bevorzugt am Tastelement wenigstens ein Sensor vorgesehen, der eingerichtet ist, eine Andruckkraft der Anlagefläche an das Werkstück oder eine Verlagerung des Tastelementes und damit eine Maßabweichung zu erfassen. Die durch den Sensor erfaßte Andruckkraft der Anlagefläche an das Werkstück bzw. die Information über eine Verlagerung des Tastelementes kann von der Steuerung genutzt werden, um die Prozessführung zu verbessern. So kann ungeachtet des bestehenden NC-Programms eine steuerungstechnische Anpassung an die Ist-Geometrie des Werkstücks erfolgen. Eine angepasste Bearbeitung wird dadurch ermöglicht und übermäßige Belastungen auf das Werkstück während der Bearbeitung vermieden. Ferner kann durch eine Auswertung der Andruckkraft bzw. der Maßabweichung ein kritisches Abweichen der Ist-Geometrie von einer Soll-Geometrie des Werkstücks erfasst werden und beispielsweise ein Notprogramm aufgelöst werden. Dadurch kann zum Einen die Bearbeitungsqualität verbessert, und zum Anderen kann der Ausschussanteil an Werkstücken minimiert werden.

Gemäß der Erfindung ist das Tastelement um eine Achse drehbar gelagert. Diese Achse ist erfindungsgemäß im Wesentlichen koaxial zur Umlaufachse des Werkzeugkopfes angeordnet. Bei der Konturverfolgung beispielsweise von Werkstückkanten wird es dadurch ermöglicht, dass das Tastelement wenigstens teilweise auf der Werkstückoberfläche abrollt und nicht nur gleitet. Dadurch lassen sich die Reibungskräfte am Tastelement verringern, was geringere Antriebskräfte und Antriebsleistungen ermöglicht. Damit kann der Energiebedarf bei der Bearbeitung reduziert werden. Durch das Anordnen der Drehachse von dem Tastelement koaxial zur Umlaufachse des Werkzeugkopfes wird das Reaktionsverhalten der Wechselwirkung zwischen Werkstück und Tastelement besonders gut vorhersehbar und beherrschbar. Dadurch lassen sich die Tastkräfte am Tastelement besonders gut in der Steuerung abbilden und berücksichtigen. Ferner wird auf diese Weise auch die Geometrie besonders einfach.

Gemäß einer bevorzugten Ausführungsform ist das Bearbeitungsaggregat eingerichtet, ein Fluid, bevorzugt Druckluft zwischen das Tastelement und das Werkstück einzublasen. Das Führen des Bearbeitungsaggregates entlang der Werkstückoberfläche mittels der Tastanordnung ist dann besonders genau, wenn sich keine Fremdkörper, zum Beispiel Späne zwischen dem Werkstück und der Anlagefläche des Tastelementes befinden. Durch das Einblasen der Druckluft zwischen das Tastelement und das Werkstück können solche Späne weggeblasen werden, wodurch verhindert wird, dass sich diese zwischen das Tastelement und das Werkstück setzen. Dadurch wird ein direkter Kontakt der Anlagefläche des Tastelementes mit der Werkstückoberfläche sichergestellt und die Genauigkeit der Bearbeitung erfüllt. Bevorzugt sind dazu ein oder mehrere Luftaustrittslöcher zur Abgabe von Druckluft in der Anlagefläche vorgesehen. Durch das direkte Vorsehen der Luftaustrittslöcher an der Anlagefläche wird ermöglicht, dass Fremdkörper, zum Beispiel Späne, beidseitig von unter der Anlagefläche seitlich ausgeblasen werden. Ferner erfolgt der Druckausstoß so auch in unmittelbarer Nähe zur Anlagefläche, wodurch mit einer geringen
Druckluftausblasleistung auszukommen ist.

Gemäß einer bevorzugten Ausführungsform der vorliegenden Erfindung ist die Anlagefläche wenigstens teilweise beschichtet, bevorzugt teflonbeschichtet. Für das Reibungsverhalten der Anlagefläche auf der Werkstückoberfläche ist die Oberflächenbeschaffenheit der Anlagefläche ausschlaggebend. Das Reibungsverhalten der Anlagefläche ist für die Antriebsleistung der Maschine und die erforderlichen Haltekräfte von dem Werkstück daher von Bedeutung. Vorteilhaft werden hier Beschichtungen auf der Anlagefläche vorgesehen, die den Reibungskoeffizienten beim Gleiten der Anlagefläche auf dem Werkstückmaterial verringern. Als vorteilhaft hat sich die Teflonbeschichtung der Anlagefläche herausgestellt, da diese das Reibungsverhalten der Anlagefläche auf vielen Werkstoffen, insbesondere auf Holzwerkstoffen verringert.

### Kurze Beschreibung der Zeichnungen

Die Erfindung wird im Folgenden anhand von Ausführungsbeispielen unter Bezugnahme auf die beiliegenden Figuren der Zeichnungen näher erläutert.

Von den Figuren zeigen:
- Fig. 1: zeigt eine schematische Darstellung eines Tastaggregates von einem erfindungsgemäßen Bearbeitungsaggregat; und
- Fig. 2: zeigt ein erfindungsgemäßes Bearbeitungsaggregat gemäß der Ausführungsform aus Fig. 1

In den Figuren bezeichnen dieselben Bezugszeichen gleiche oder funktionsgleiche Komponenten, soweit nichts Gegenteiliges angegeben ist.

### Ausführliche Beschreibung von bevorzugten Ausführungsformen

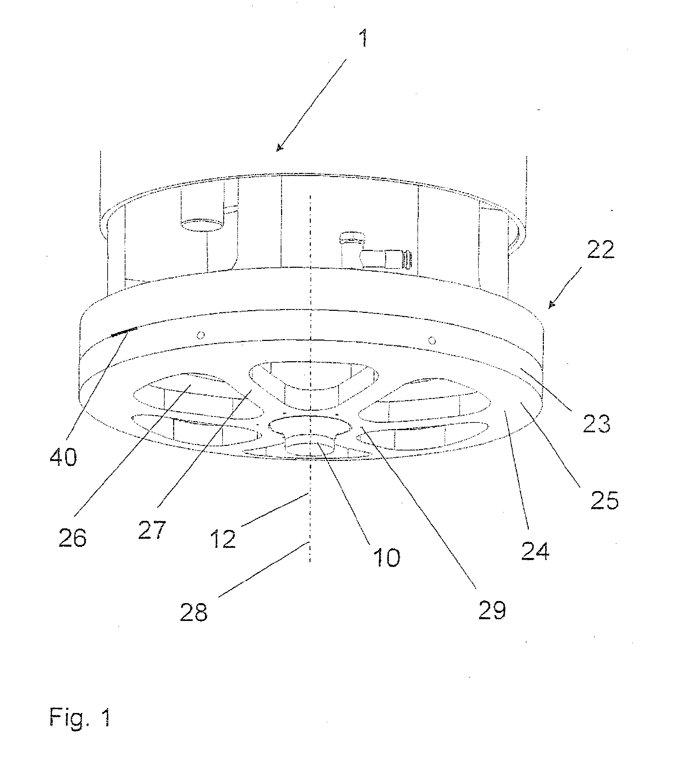

Fig. 1 zeigt einen Ausschnitt aus einem erfindungsgemäßen Bearbeitungsaggregat 1, der im Wesentlichen den Werkzeugkopf 10 mit der Tastanordnung 22 zeigt. Das Bearbeitungsaggregat 1 weist einen Werkzeugkopf 10 auf, der vorgesehen ist, um ein Werkzeug, beispielsweise ein Fräswerkzeug, aufzunehmen und zu halten. Der Werkzeugkopf 10 ist bei diesem Ausführungsbeispiel um eine Rotationsachse 12 drehbar angeordnet. Das Bearbeitungsaggregat 1 weist ferne eine Tastanordnung 22 auf, die ein Tastelement 23 mit einer Anlagefläche 24 zum Abstützen des Bearbeitungsaggregates 1 an einem Werkstück (in Fig. 1 nicht dargestellt) aufweist.

Bei diesem Ausführungsbeispiel ist an der Tastanordnung 22 ein Tastring 25 ausgebildet. Der Tastring 25 setzt sich radial in Richtung auf den Werkzeugkopf 10 zu als Rippen 27 fort. Zwischen den Rippen 27 sind Aussparungen 26 vorgesehen. Die Anlagefläche 24 ist bei diesem Ausführungsbeispiel flächenmäßig im Wesentlichen an dem Tastring 25 vorgesehen. Die Anlagefläche 24 weist bei diesem Ausführungsbeispiel die Form einer Kugelkalotte auf. Die Rippen 27 setzen die kalottenförmig geformte Anlagefläche 24 radial ebenfalls in Kugelkalottenform fort. Die Rippen 27 würden somit flächig an der Anlagefläche 24, die durch die Form der Anlagefläche 24 im Bereich des Tastrings 25 definiert ist, anliegen. Der Tastring 25 ist bei diesem Ausführungsbeispiel koaxial zur Rotationsachse des Werkzeugkopfes 10 angeordnet. An der Tastanordnung 22 ist ferner ein Sensor 40 vorgesehen, der eingerichtet ist, eine Andruckkraft der Anlagefläche 24 an das Werkstück 30 zu erfassen. Ferner sind bei diesem Ausführungsbeispiel in der Anlagefläche 24
Luftaustrittslöcher 29 zur Abgabe von Druckluft vorgesehen.

Beim Bearbeiten wird das Bearbeitungsaggregat 1 entlang der Oberfläche eines Werkstücks bewegt, indem die Anlagefläche 24 über das Werkstück gleitet und dadurch einen definierten Abstand zwischen dem Werkstück und dem Werkzeugkopf 10 des Bearbeitungsaggregates 1 sicherstellt. Mit der als Kugelkalotte geformten Anlagefläche 24 des Tastelementes 23 können mit der Tastanordnung 22 des erfindungsgemäßen Bearbeitungsaggregates 1 auch konkav geformte Werkstückflächen abgefahren werden. Dabei besteht auch bei konkaven Werkstückflächen eine definierte Kontaktsituation zwischen der Anlagefläche 24 und dem Werkstück in Form einer erweiterten punktförmigen Kontaktfläche. Der Sensor 40 erlaubt es, die Kontaktkräfte, die zwischen dem Bearbeitungsaggregat 1 und dem Werkstück auftreten, einzustellen. So kann eine Beschädigung der Werkstückoberfläche durch zu starke Andruckkräfte der Anlagefläche 24 an das Werkstück verhindert werden. Ferner können so Ungenauigkeiten bei der Konturverfolgung vermieden werden, die dadurch entstehen, dass sich die Anlagefläche 24 auf Grund zu starker Andruckkräfte in das Werkstück eindrückt und damit der Abstand zwischen Werkzeugkopf 10 und Werkstückoberfläche nicht mehr dem vorgesehenen Sollwert entspricht. Die Luftaustrittslöcher 29 an der Anlagefläche 24 erlauben es, Späne, die bei der Bearbeitung entstehen, wegzublasen und damit zu verhindern, dass diese zwischen die Anlagefläche 24 und das Werkstück gelangen, wodurch sich der Abstand zwischen Werkzeugkopf 10 und Werkstück erhöhen würde und was daher Bearbeitungsungenauigkeiten bedingen würde.

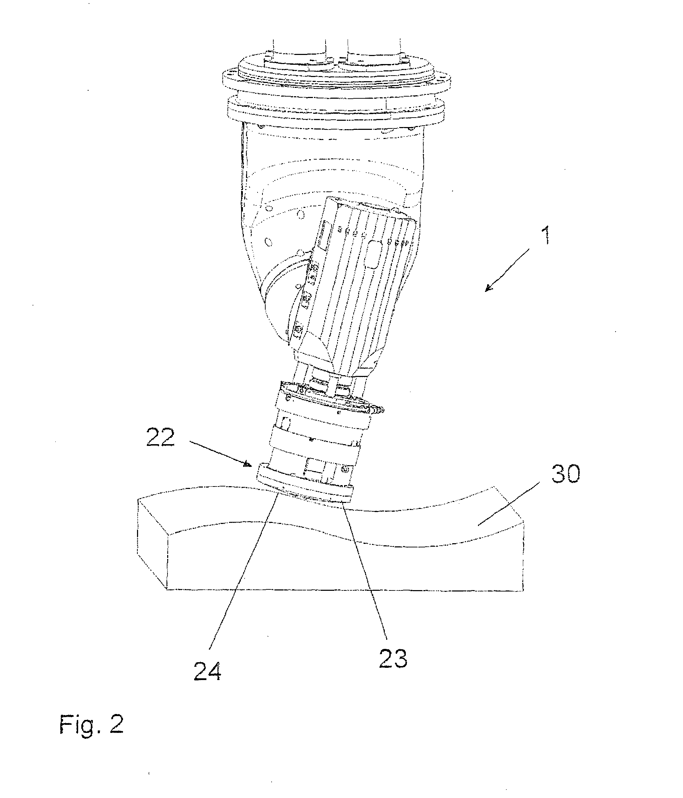

Fig. 2 zeigt ein erfindungsgemäßes Bearbeitungsaggregat 1 gemäß der Ausführungsform aus Fig. 1. Das Bearbeitungsaggregat 1 ist hier im Zusammenhang mit einem zu bearbeitenden Werkstück 30 dargestellt, das eine teilweise konkave Oberflächengestalt aufweist. Mittels der Tastanordnung 22, die das Tastelement 23 mit der kalottenförmigen Anlagefläche 24 aufweist, kann das Bearbeitungsaggregat 1 gleitend über das konkav geformte Werkstück 1 geführt werden. Dadurch wird der Bearbeitungskopf 10 des Bearbeitungsaggregates 1 in einem definierten Abstand entlang der Oberfläche des Werkstücks geführt. Damit wird eine genaue Bearbeitung auch konkav geformter Oberflächen des Werkstücks 30 ermöglicht. Insbesondere kann mittels des erfindungsgemäßen Bearbeitungsaggregates 1 eine ungenaue Konturnachführung bedingende Mehrpunktberührung zwischen der Tastfläche 24 der Tastanordnung 22 und einem konisch geformten Werkstück 30 vermieden werden.

### Bezugszeichenliste

- 1: Bearbeitungsaggregat
- 10: Werkzeugkopf
- 11: Werkzeug
- 12: Rotationsachse des Werkzeugkopfes
- 22: Tastanordnung
- 23: Tastelement
- 24: Anlagefläche
- 25: Tastring
- 26: Aussparung
- 27: Rippe
- 28: Achse
- 29: Fluidaustrittsloch
- 30: Werkstück
- 40: Sensor

## Patentansprüche

1. Bearbeitungsaggregat, insbesondere 5-Achsbearbeitungsaggregat (1) zum Bearbeiten von bevorzugt dreidimensional geformten Werkstücken, die bevorzugt zumindest abschnittsweise aus Holz, aus Kunststoff oder dergleichen bestehen mit: einem Werkzeugkopf (10) zur Anordnung wenigstens einer Schneide, und einer Tastanordnung (22), die ein Tastelement (23) mit einer Anlagefläche (24) zum Abstützen des Bearbeitungsaggregates (1) bei Verwendung an einem Werkstück (30) aufweist, **dadurch gekennzeichnet, dass** das Tastelement (23) um eine Achse (28) drehbar gelagert ist, dass diese Achse (28) im Wesentlichen koaxial zu einer Rotationsachse (12) des Werkzeugkopfes (10) verläuft, und dass die Anlagefläche (24) zumindest abschnittsweise die Form einer Kalotte aufweist.

2. Bearbeitungsaggregat (1) nach Anspruch 1,
**dadurch gekennzeichnet,**
**dass** die Anlagefläche (24) wenigstens teilweise die Form eines von: Kugelsegment, Hyperboloidsegment, Ellipsoidsegment, Paraboloidsegment oder einer Kombination davon aufweist.

3. Bearbeitungsaggregat (1) nach Anspruch 1 oder Anspruch 2,
**dadurch gekennzeichnet,**
**dass** das Tastelement (23) einen Tastring (25) aufweist, an dem ein wesentlicher Teil der Anlagefläche (24) ausgebildet ist.

4. Bearbeitungsaggregat (1) nach Anspruch 3,
**dadurch gekennzeichnet,**
**dass** die Anlagefläche (24) am Tastring (25) wenigstens teilweise eine radiale Erstreckung von weniger als 10 mm, insbesondere weniger als 5 mm, beispielsweise 1 mm aufweist.

5. Bearbeitungsaggregat (1) nach Anspruch 3 oder Anspruch 4,
**dadurch gekennzeichnet,**
**dass** der Tastring (25) mit sich radial erstreckenden Rippen (27) verbunden ist.

6. Bearbeitungsaggregat (1) nach einem der vorhergehenden Ansprüche,
**dadurch gekennzeichnet,**
**dass** die Tastanordnung (22) nachgiebig am Bearbeitungsaggregat (1) gelagert ist.

7. Bearbeitungsaggregat (1) nach einem der vorhergehenden Ansprüche,
**dadurch gekennzeichnet,**
**dass** wenigstens ein Sensor (40) vorgesehen ist, der eingerichtet ist, eine Andruckkraft der Anlagefläche (24) an das Werkstück (30) und/oder eine Verlagerung des Tastelementes (23) bzw. der Tastanordnung (22), d.h. eine Maßabweichung zu erfassen.

8. Bearbeitungsaggregat (1) nach einem der vorhergehenden Ansprüche,
**dadurch gekennzeichnet,**
**dass** das Bearbeitungsaggregat (1) eingerichtet ist, ein Druckfluid zwischen das Tastelement (23) und das Werkstück (30) einzublasen.

9. Bearbeitungsaggregat (1) nach Anspruch 8,
**dadurch gekennzeichnet,**
**dass** an der Anlagefläche (24) ein oder mehrere Fluidaustrittslöcher (29) zur Abgabe des Druckfluids vorgesehen sind.

10. Bearbeitungsaggregat (1) nach einem der vorhergehenden Ansprüche,
**dadurch gekennzeichnet,**
**dass** die Anlagefläche (24) wenigstens teilweise beschichtet, insbesondere PTFE beschichtet ist.

11. Bearbeitungsaggregat (1) nach einem der vorhergehenden Ansprüche,
**dadurch gekennzeichnet,**
**dass** das Bearbeitungsaggregat (1) mit einer kardanischen Bearbeitungskinematik ausgebildet ist.

## Claims

1. Machining unit, in particular five-axis machining unit (1) for machining preferably three-dimensionally shaped workpieces which are preferably at least in one section made of wood, plastic or the like, having:
a tool head (10) for the arrangement of at least one blade, and a sensing assembly (22) which has a sensing element (23) with a contact face (24) for supporting the machining unit (1) when used on a workpiece (30),
**characterised in that** the sensing element (23) is mounted so as to be rotatable about an axis (28), **in that** this axis (28) runs substantially coaxially with an axis of rotation (12) of the tool head (10), and **in that** the contact face (24) at least in one section has the shape of a spherical cap.

2. Machining unit (1) according to claim 1, **characterised in that** the contact face (24) at least partially has the shape of one of: spherical segment, hyperboloid segment, ellipsoid segment, paraboloid segment or a combination thereof.

3. Machining unit (1) according to claim 1 or claim 2, **characterised in that** the sensing element (23) has a sensing ring (25) on which is formed a substantial portion of the contact face (24).

4. Machining unit (1) according to claim 3, **characterised in that** the contact face (24) on the sensing ring (25) at least partially has a radial extent of less than 10 mm, in particular less than 5 mm, for example 1 mm.

5. Machining unit (1) according to claim 3 or claim 4, **characterised in that** the sensing ring (25) is connected to radially extending ribs (27).

6. Machining unit (1) according to any of the preceding claims, **characterised in that** the sensing assembly (22) is mounted flexibly on the machining unit (1).

7. Machining unit (1) according to any of the preceding claims, **characterised in that** at least one sensor (40) is provided, which is designed to detect a contact pressure of the contact face (24) on the workpiece (30) and/or a displacement of the sensing element (23) or sensing assembly (22), i.e. a dimensional deviation.

8. Machining unit (1) according to any of the preceding claims, **characterised in that** the machining unit (1) is designed to inject a pressurised fluid between the sensing element (23) and the workpiece (30).

9. Machining unit (1) according to claim 8, **characterised in that** on the contact face (24) are provided one or more fluid exit holes (29) for dispensing the pressurised fluid.

10. Machining unit (1) according to any of the preceding claims, **characterised in that** the contact face (24) is at least partially coated, in particular PTFE-coated.

11. Machining unit (1) according to any of the preceding claims, **characterised in that** the machining unit (1) is designed with cardanic machining kinematics.

## Revendications

1. Agrégat d'usinage, en particulier agrégat d'usinage à 5 axes (1), pour l'usinage de pièces de formes préférentiellement tridimensionnelles préférentiellement au moins partiellement en bois, en matière plastique ou similaire, avec :
une tête d'outil (10) pour la disposition d'au moins une lame, et un dispositif de palpage (22) comportant un élément palpeur (23) avec une surface d'appui (24) pour l'appui de l'agrégat d'usinage (1) lors de l'utilisation contre une pièce (30), **caractérisé en ce que** l'élément palpeur (23) est monté de manière rotative autour d'un axe (28), **en ce que** ledit axe (28) s'étend sensiblement coaxialement à un axe de rotation (12) de la tête d'outil (10), et **en ce que** la surface d'appui (24) a au moins en partie la forme d'une calotte.

2. Agrégat d'usinage (1) selon la revendication 1,
**caractérisé en ce que**
la surface d'appui (24) a au moins partiellement une des formes suivantes : segment sphérique, segment hyperboloïde, segment ellipsoïde, segment paraboloïde ou combinaison de celles-ci.

3. Agrégat d'usinage (1) selon la revendication 1 ou la revendication 2,
**caractérisé en ce que**
l'élément palpeur (23) comporte une bague palpeuse (25), sur laquelle est formée une partie importante de la surface d'appui (24).

4. Agrégat d'usinage (1) selon la revendication 3,
**caractérisé en ce que**
la surface d'appui (24) présente sur la bague palpeuse (25) au moins partiellement une extension radiale inférieure à 10 mm, en particulier inférieure à 5 mm, notamment égale à 1 mm.

5. Agrégat d'usinage (1) selon la revendication 3 ou la revendication 4,
**caractérisé en ce que**
la bague palpeuse (25) est reliée à des entretoises (27) à extension radiale.

6. Agrégat d'usinage (1) selon l'une des revendications précédentes,
**caractérisé en ce que**
le dispositif de palpage (22) est monté de manière élastique sur l'agrégat d'usinage (1).

7. Agrégat d'usinage (1) selon l'une des revendications précédentes,
**caractérisé en ce que**
au moins un capteur (40) est prévu, lequel est configuré pour détecter une force de serrage de la surface d'appui (24) contre la pièce (30) et/ou un déplacement de l'élément palpeur (23) ou du dispositif de palpage (22), autrement dit un écart de cote.

8. Agrégat d'usinage (1) selon l'une des revendications précédentes,
**caractérisé en ce que**
l'agrégat d'usinage (1) est configuré pour souffler un fluide sous pression entre l'élément palpeur (23) et la pièce (30).

9. Agrégat d'usinage (1) selon la revendication 8,
**caractérisé en ce que**
un ou plusieurs trous de sortie du fluide (29) sont prévus sur la surface d'appui (24) pour le refoulement du fluide sous pression.

10. Agrégat d'usinage (1) selon l'une des revendications précédentes,
**caractérisé en ce que**
la surface d'appui (24) est au moins partiellement revêtue, en particulier de PTFE.

11. Agrégat d'usinage (1) selon l'une des revendications précédentes,
**caractérisé en ce que**
l'agrégat d'usinage (1) est réalisé avec une cinématique d'usinage à cardan.
